# EUROPÄISCHE PATENTSCHRIFT

(11) **EP 1 554 230 B1**
(45) Veröffentlichungstag und Bekanntmachung des Hinweises auf die Patenterteilung: **06.09.2006**
(21) Anmeldenummer: 03753334.6
(22) Anmeldetag: 30.09.2003
(51) Int. Cl.: C04B 41/87, F01D 5/28

(54) **SCHUTZSCHICHTSYSTEM FÜR NICHTOXIDISCHE, SI-HALTIGE SUBSTRATE**
PROTECTIVE LAYER SYSTEM FOR NON-OXIDIC SUBSTRATES CONTAINING SI
SYSTEME DE COUCHES DE PROTECTION DESTINE A DES SUBSTRATS NON OXYDIQUES CONTENANT DU SI

(30) Priorität: 25.10.2002 DE 10250037
(43) Veröffentlichungstag der Anmeldung: 20.07.2005
(73) Patentinhaber: Forschungszentrum Jülich GmbH, 52425 Jülich (DE)
(72) Erfinder: LATZEL, Silke, 54329 Konz (DE); VASSEN, Robert, 52134 Herzogenrath (DE); STÖVER, Detlev, 52382 Nierderzier (DE)
(86) Internationale Anmeldenummer: PCT/DE2003/003245
(87) Internationale Veröffentlichungsnummer: WO 2004/039750

(56) Entgegenhaltungen:
- US-B1- 6 312 763
- US-B1- 6 319 614
- US-B1- 6 387 456

## Beschreibung

Die Erfindung betrifft ein Schutzschichtsystem für Si-haltige Substrate, insbesondere ein Schutzschichtsystem für nichtoxidische, Si-haltige Keramiken, welches gegen hohe thermische Belastungen und Umwelteinflüsse schützt.

### Stand der Technik

Si-haltige Hochleistungskeramiken, wie beispielsweise Siliziumnitrid (Si₃N₄) oder Siliziumcarbid (SiC) gewinnen wegen ihrer hohen mechanischen Festigkeit in Verbindung mit einer hohen Verschleiß- und Temperaturfestigkeit immer mehr an Bedeutung. Nachteilig ist jedoch die deutliche Begrenzung ihres Einsatzbereiches in nichtoxidierender Atmosphäre im Hinblick auf hohe Temperaturen. Bislang ist der Einsatz von z. B. Si₃N₄ oder SiC auf Temperaturen bis 1400 °C begrenzt.

Um Si-haltige Hochleistungskeramiken auf Dauer in einer oxidierenden Atmosphäre bei hohen Temperaturen einsetzen zu können, wird der Werkstoff regelmäßig mit einer Schutz- bzw. Deckschicht versehen.

Verschiedene Schutzschichten für Si-haltige nichtoxidische Keramiken sind aus der Literatur bekannt. Dazu gehören beispielsweise SiO₂, Mullit (3 Al₂O₂·2 SiO₂), Mischungen aus Mullit mit BSAS (Barium-Strontium-Alumosilikat), Mullit mit Calziumalumosilikat, Mullit mit Cordierit (Mg₂Al₄Si₅O₁₈), sowie Mullit mit Alumosilikaten generell [1]. Auch hochtemperaturfeste Silikate wie beispielsweise Seltenerd-Silikate oder auch ZrSiO₄ werden regelmäßig als oxidische Schutzschicht eingesetzt.

In US 6,312,763 wird als Schutzschicht für ein Silizium aufweisendes Substrat eine Yttriumsilikatschicht beschrieben. Ferner weist der dort beschriebene Gegenstand vorteilhaft eine Haftvermittlerschicht zwischen dem Substrat und der Yttriumsilikatschicht und optional eine weitere Schicht zwischen Substrat und Haftvermittlerschicht auf. Als geeignete Materialien für die Haftvermittlerschicht werden SiO₂, Mullit, Mullite-Barium-Strontium-Alumosilikat, Mullit-Yttriumsilikat, Mullit-Kalzium-Alumosilikate und metallisches Silizium genannt.

Mullit ist das einzig bekannte stabile Al-Silikat. Es ist bis ca. 1850 °C einsetzbar und weist eine Zusammensetzung innerhalb des Lösungsbereiches von 3 Al₂O₃·2 SiO₂ bis 2 Al₂O₃·SiO₂ auf. Mullit ist als Aluminiumsilikatphase oxidationsbeständig und weist ein sehr gutes Thermoschockverhalten und eine hohe chemische Stabilität auf. Mullit besitzt weiterhin eine geringe Wärmeleitfähigkeit und einen niedrigen Wärmeausdehnungskoeffizienten, der ähnlich demjenigen von Si₃N₄ oder SiC ist. Seine Thermoschockempfindlichkeit ist gering. Große Temperaturwechsel können sogar eine Festigkeitssteigerung bewirken. Oberhalb von T = 1890 °C schmilzt Mullit.

Nachteilig verliert Mullit bei Kontakt mit Wasserdampf bei hohen Temperaturen SiO₂. Aus diesem Grund sind sogenannte 'top coatings' bekannt, die ein Verflüchtigen des SiO₂ aus dem Mullit regelmäßig verhindern sollen [2]. Als Deckschicht (top coating) für eine Mullitbeschichtung sind aus der Literatur unter anderem Barium-Strontium-Alumosilikate oder auch Yttriumsilikate bekannt.

Deckschichten aus Barium-Strontium-Alumosilikaten führen jedoch regelmäßig zu chemischen Reaktionen der Grenzflächen, während bei Yttriumsilikaten häufig mechanische Probleme auftreten [1].

Das ebenfalls aus der Literatur bekannte System Mullit/YSZ ist nur bei Luftatmosphäre als Schutzschicht geeignet. In Anwesenheit von Wasserdampf führt die Phaseninstabilität bei hohen Temperaturen zur Rißbildung und damit zu einer Verstärkung der nachteiligen Oxidationsbildung [1].

Bekannt sind auch Yttriumsilikate als Material für eine Deckschicht auf einer C/Si-Schicht, wobei eine SiC-Schicht als Zwischenschicht dient. Eine Anpassung des thermischen Ausdehnungskoeffizienten kann über die Mischung von Yttriummonosilikat und Yttriumdisilikat erfolgen [3], [4].

Insgesamt sind die aus dem Stand der Technik für metallische Substrate bekannte Deckschichten, aufgrund ihres thermischen Ausdehnungskoeffizienten und/oder ihrer chemischen Unverträglichkeit für das Aufbringen auf einer Si-haltigen, nichtoxidischen Keramiken in der Regel ungeeignet. Mehrlagige Schutzsysteme, deren thermische Ausdehnungskoeffizienten nicht genügen aneinander angepasst sind, führen in der Regel zu thermisch induzierten Spannungen und damit letztlich zu Rissen innerhalb der Schichten. In diesen Fällen gelangen Sauerstoff und/oder Wasserdampf durch das Schutzschichtsystem bis zum Substrat und führen dort aufgrund der Oxidation zu einer verringerten Langzeitstabilität.

### Aufgabe und Lösung

Aufgabe der Erfindung ist es, eine Schutzschicht für nichtoxidische Si-haltige Hochtemperaturkeramiken zu schaffen, welche die aus dem Stand der Technik bekannten Nachteile bezüglich der Oxidations- und/oder Temperaturempfindlichkeit überwindet.

Die Aufgabe wird gelöst durch ein Schutzschichtsystem für ein Si-haltiges, nichtoxidisches Substrat mit der Gesamtheit der Merkmale gemäß Hauptanspruch. Weitere vorteilhafte Ausgestaltungen dieses Schutzschichtsystems sowie vorteilhafte Verwendungen sind in den darauf rückbezogenen Unteransprüchen zu finden.

### Gegenstand der Erfindung

Die Erfindung betrifft ein Schutzschichtsystem für eine Si-haltige Keramik, umfassend eine auf der Si-haltigen, nichtoxodischen Keramik angeordnete Schutzschicht, welche ein Si-haltiges Oxid aufweist, sowie eine auf dieser Schutzschicht angeordnete Deckschicht. Die Deckschicht weist dabei eine Sauerstoff undurchlässige Verbindung mit einem thermischen Ausdehnungskoeffizienten von weniger als 9,0*10⁻⁶/K, insbesondere von weniger als 8,5*10⁻⁶/K, und besonders vorteilhaft zwischen 2 und 5*10-⁶/K auf.

Unter Si-haltigen Keramiken sind insbesondere Keramiken aus C/SiC oder Si₃N₄ zu verstehen. Es handelt sich dabei um nichtoxidische Keramikwerkstoffe, die besondere mechanische Stabilität aufweisen. Für den Einsatz als Hochtemperaturwerkstoff müssen sie jedoch gegen Oxidation geschützt werden. Die Si-haltigen Keramiken weisen in der Regel einen thermischen Ausdehnungskoeffizienten im Bereich von 2*10⁻⁶ bis 5*10⁻⁶/K auf (SiC: 4,5*10⁻⁶/K, C/SiC: ca. 2 bis 4*10⁻⁶/K)

Das erfindungsgemäße Schutzschichtsystem weist eine erste Schutzschicht aus Mullit auf. Mullit besitzt einen thermischen Ausdehnungskoeffizienten von 5,4*10⁻⁶/K und ist damit als Schutzschicht auf einem Si-haltigen Substrat besonders gut geeignet.

Erfindungsgemäß weist das Schutzschichtsystem für eine Si-haltige Keramik darüber hinaus neben der Schutzschicht eine darauf angeordnete Deckschicht auf. Die Deckschicht verhindert vorteilhaft den Verlust von SiO₂, der regelmäßig bei Kontakt der Si-haltigen Oxidschicht mit Wasserdampf auftritt [2]. Ferner reduziert der an den thermischen Ausdehnungskoeffizienten der Schutzschicht angepasste thermische Ausdehnungskoeffizient der Deckschicht die mechanischen Spannungen bei großen Temperaturunterschieden, wie sie nachteilig bei der aus dem Stand der Technik bekannten Kombination von Yttriumsilikat auf Mullit auftreten. Auch gibt es keine chemischen Unverträglichkeiten, wie sie von Barium-Strontium-Alumosilikat auf Mullit bekannt sind.

Die erfindungsgemäße Deckschicht weist eine Pyrochlorverbindung in Form von Lanthanhafnat oder ein Hafniumorthosilikat auf.

Lanthanhafnat (La₂Hf₂O₇) besitzt einem thermischen Ausdehnungskoeffizienten von ca. 8, 2*10⁻⁶/K, Hafniumorthosilikat (HfSiO₄) einen sehr niedrigen thermischen Ausdehnungskoeffizienten von ca. 3,6*10⁻⁶/K.

Die Deckschichten aus den oben aufgeführten Materialien führen in Verbindung mit einer Mullitschicht zu einem vorteilhaften Schutzschichtsystem, welches sowohl als Wärmedämmung als auch als Schutzschicht gegen Oxidation durch Sauerstoff in Anwesenheit von Wasserdampf auf einer Si-haltigen nichtoxidischen Keramik geeignet ist.

Die aufeinander abgestimmten thermischen Ausdehnungskoeffizienten der einzelnen Schichten (2-lagiges Schichtsystem auf Substrat) verhindern in der Regel thermisch induzierte Spannungen in dem Material, so daß nahezu keine Risse oder Poren entstehen. Dies wirkt sich posi-tiv auf den Schutz gegen Sauerstoff und Wasserdampf aus, da nur eine dichte Schutzschicht das Eindringen von Sauerstoff verhindern kann und so eine Oxidation des eigentlichen Substrates verhindert wird.

Eine weitere Ausgestaltung der Erfindung sieht vor, daß das Schutzschichtsystem wenigstens teilweise gradiert aufgebaut ist. Dazu kann beispielsweise eine Schicht vorliegen, in der sich die Zusammensetzung kontinuierlich von der der Schutzschicht (Z_{S}) in die der Deckschicht (Z_{D}) verändert.
Gradierte Schicht: (von 0% Z_{S} + 100% Z_{D} bis 100%Z_{S} + 0% Z_{D})

In einer weiteren Ausgestaltung der Erfindungen sind auch Kombinationen von einzelnen Schichten und gradierten Schichten möglich. So kann das Schutzschichtsystem beispielsweise auch aus einer Schutzschicht, einer darauf angeordneten gradierten Schicht und einer darauf abschließend angeordneten Deckschicht bestehen. Dabei weist die gradierte Schicht vorteilhaft eine sich ändernde Zusammensetzung auf, die zwischen der Zusammensetzung der reinen Deckschicht und der Zusammensetzung der reinen Schutzschicht liegt. Dies kann beispielsweise eine solche Schichtenfolge sein:
Schutzschicht: (Z_{S}) - gradierte Zwischenschicht: (von 20% Z_{S} + 80% Z_{D} bis 80% Z_{S} + 20% Z_{D}) - Deckschicht: (Z_{D}) .
Verwendung findet das erfindungsgemäße Schutzschichtsystem als Beschichtung auf nichtoxidischen, Si-haltigen Bauteilen als Wärmedämmschicht, oder auch als Korrosions- bzw. Oxidationsschutzschicht gegen Sauerstoff und Wasserdampf insbesondere bei höheren Temperaturen oberhalb von ca. 300 °C.

### Spezieller Beschreibungsteil

Nachfolgend wird der Gegenstand der Erfindung anhand zweier Figuren und eines Ausführungsbeispiels näher erläutert, ohne daß der Gegenstand der Erfindung dadurch beschränkt wird.

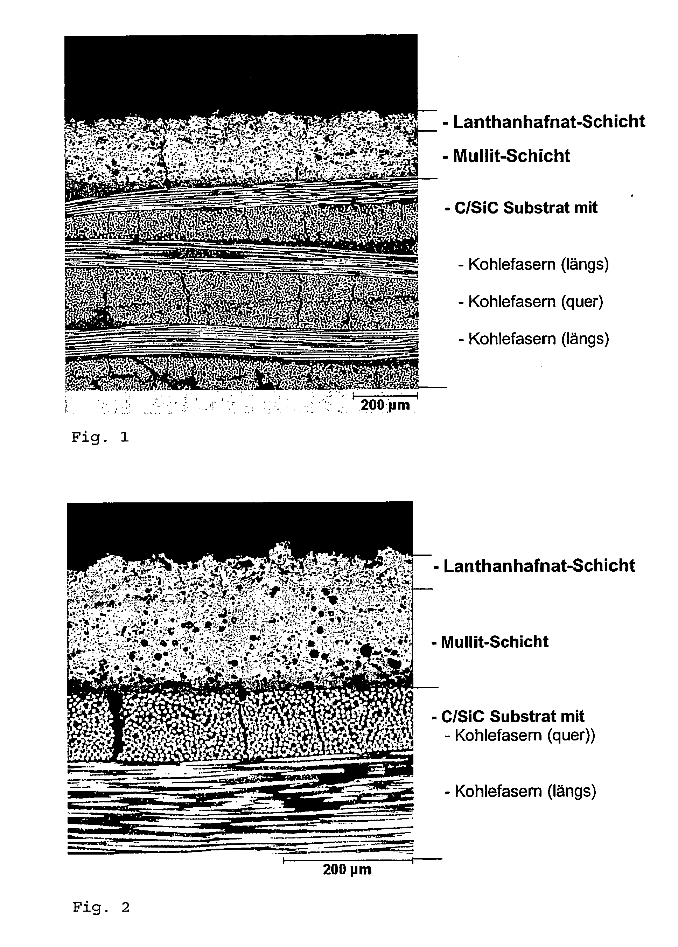

Die Figuren 1 und 2 zeigen mikroskopische Aufnahmen eines Querschnitts durch ein auf einem C/SiC-Substrat aufgebrachten, 2-lagiges erfindungsgemäßes Schutzschichtsystem, umfassend eine Schutzschicht und eine Deckschicht.

In dem C/SiC-Substrat sind die Kohlefasern deutlich zu erkennen. Auf dem Substrat findet sich eine ca. 150 µm dicke Schutzschicht aus Mullit und die darauf angeordnete Deckschicht aus Lanthanhafnat in einer Dicke von ca. 50 µm.

### Ausführungsbeispiel

Auf ein C/SiC-Substrat wird eine erste Schicht aus Mullit als Schutzschicht mit Hilfe des atmosphärischen Plasmaspritzens (APS) aufgebracht. Vorteilhaft wird zur Reduzierung der Rißbildung das Substrat zunächst aufgeheizt (siehe US 6,296,909 B1), wobei vorteilhaft eine Temperatur eingestellt wird, die oberhalb die Kristallisationstemperatur der Schutzschicht liegt.

Die Schutzschicht wird typischerweise in einer Dicke von 100 bis 200 µm aufgebracht, also beispielsweise in einer Dicke von 150 µm.

Auf diese Schutzschicht wird anschließend die Deckschicht in Form einer Lanthanhafnatschicht ebenfalls mit Hilfe des atmosphärischen Plasmaspritzens (APS) aufgebracht. Eine vorteilhafte Dicke für die Deckschicht liegt zwischen 20 und 80 µm, insbesondere bei 50 µm.

Das gesamte 2-lagige Schutzschichtsystem weist in diesem Fall damit eine Dicke von ca. 200 µm auf.

Alternativ könnte auch eine ca. 200 µm dicke gradierte Schicht aufgetragen werden, in der die Zusammensetzung stetig von der der reinen Schutzschicht zu der der reinen Deckschicht variiert.

### Zitierte Literatur:

[1] K. N. Lee; "Degradation of environmental barrier coatings (EBC) due to chemical and thermal expansion incompatibility"; Electrochemical Society Proceedings; 2001-12, 124-135.
[2] E. J. Opila, R. E. Hann, Jr.; "Paralinear oxidation of CVD SiC in water vapor"; J. Am. Ceram. Soc.; Vol. 80 (1), 197-205 (1997).
[3] M. Aparicio, A. Duran; "Yttrium Silicate coatings for oxidation protection of carbon-silicon carbide composites"; J. Am. Ceram. Soc.; Vol. 83 (6), 1351-55 (2000).
[4] M. Kato, T. Tukasawa, Y. Goto; "Reactions in Y₂SiO₅-SiC and Y₃Al₅O₁₂-SiC in Yttrium-Silicate/Silicon Carbide layered composites"; Journal of the Ceramic Society of Japan; Vol. 108 (9), 861-864 (2000).

## Patentansprüche

1. Schutzschichtsystem für eine Si-haltige, nichtoxidische Keramik, umfassend eine erste Schutzschicht sowie eine auf der Schutzschicht angeordnete Deckschicht, **gekennzeichnet durch**,
eine Schutzschicht aus Mullit, und
eine Sauerstoff undurchlässige Deckschicht aus Lanthanhafnat oder Hafniumorthosilikat mit einem thermischen Ausdehnungskoeffizienten von weniger als 9,0*10⁻⁶/K.

2. Schutzschichtsystem nach Annspruch 1, bei der die Deckschicht einen einem thermischen Ausdehnungskoeffizienten von weniger als 8,5*10⁻⁶/K aufweist.

3. Schutzschichtsystem nach einem der Ansprüche 1 bis 2, bei der die Schutzschicht und/oder die Deckschicht als gradierte Schichten ausgebildet sind.

4. Schutzschichtsystem nach einem der Ansprüche 1 bis 3, bei dem zwischen der Schutzschicht und der Deckschicht eine zusätzliche gradierte Schicht angeordnet ist.

5. Verwendung eines Schutzschichtsystem nach einem der Ansprüche 1 bis 4 als Korrosionsschutzschicht und/oder als Wärmedämmschicht auf einer Si-haltigen Keramik aus SiC, Si₃N₄ oder C/SiC.

6. Verwendung nach Anspruch 5 mit einer Schutzschicht aus Mullit und einer Deckschicht aus Lanthanhafnat als Korrosionsschutzschicht und/oder als Wärmedämmschicht auf einer Si-haltigen Keramik aus SiC, Si₃N₄ oder C/SiC.

## Claims

1. Protective coating system for non-oxide ceramics containing Si, including a first protective coating and a top coating arranged on the protective coating, **characterised by** a protective coating consisting of mullite and an oxygen-impermeable top coating consisting of lanthanum hafnate or hafnium orthosilicate having a coefficient of thermal expansion of less than 9.0 x 10⁻⁶/K.

2. Protective coating system according to claim 1, in which the top coating has a coefficient of thermal expansion of less than 8.5 x 10⁻⁶/K.

3. Protective coating system according to one of claims 1 to 2, in which the protective coating and/or the top coating are designed as graduated layers.

4. Protective coating system according to one of claims 1 to 3, in which an additional graduated layer is arranged between the protective coating and the top coating.

5. Use of a protective coating system according to one of claims 1 to 4 as a corrosion-protective coating and/or as a heat-insulating layer on Si-containing ceramics consisting of SiC, Si₃N₄ or C/SiC.

6. Use according to claim 5 with a protective coating consisting of mullite and a top coating consisting of lanthanum hafnate as a corrosion-protective coating and/or as a heat-insulating layer on Si-containing ceramics consisting of SiC, Si₃N₄ or C/SiC.

## Revendications

1. Système stratifié de protection d'une céramique nonoxydée et contenant du Si, comprenant une première couche de protection, ainsi qu'une couche de finition disposée sur la couche de protection, **caractérisée par** une couche de protection en mullite et une couche de finition imperméable à l'oxygène en hafnate de lanthane ou en orthosilicate d'hafnium, ayant un coefficient de dilatation thermique de moins de 9,0*10⁻⁶ /K.

2. Système stratifié de protection suivant la revendication 1, dans lequel la couche de finition a un coefficient de dilation thermique de moins de 8,5*10⁻⁶ K.

3. Système stratifié de protection suivant l'une des revendications 1 à 2, dans lequel la couche de protection et/ou la couche de finition sont constituées sous la forme de couches graduelles.

4. Système stratifié de protection suivant l'une des revendications 1 à 3, dans lequel une couche graduelle supplémentaire est interposée entre la couche de protection et la couche de finition.

5. Utilisation d'un système stratifié de protection suivant l'une des revendications 1 à 4 comme couche de protection vis à vis de la corrosion et/ou comme couche calorifuge sur une céramique contenant du Si, en SiC, en Si₃N₄ ou en C/SiC.

6. Utilisation suivant la revendication 5 ayant une couche de protection en mullite et une couche de finition en hafnate de lanthane comme couche de protection vis-à-vis de la corrosion et/ou comme couche calorifuge sur une céramique contenant du Si, du SiC, du Si₃N₄ ou du C/SiC.
